# EUROPEAN PATENT SPECIFICATION

(11) **EP 2 220 944 B1**
(45) Date of publication and mention of the grant of the patent: **18.07.2012**
(21) Application number: 09153094.9
(22) Date of filing: 18.02.2009
(51) Int. Cl.: A23G 3/00, A23G 7/00

(54) **Method for manufacturing moulded and coded confections**
Verfahren zur Herstellung geformter und kodierter Süßwaren
Procédé de fabrication de confiseries moulées et codées

(43) Date of publication of application: 25.08.2010
(73) Proprietor: Kraft Foods R & D, Inc., Northfield, IL 60093 (US)
(72) Inventor: Loeser, Ulrich, 82054 Sauerlach (DE)
(74) Representative: HOFFMANN EITLE

(56) References cited:
- WO-A-98/30111
- DE-A1- 10 304 070
- DE-A1-102006 024 310
- US-A1- 2002 138 364

## Description

### Technical field

The present invention relates to a method for manufacturing different moulded and coded confections in a single mould. The method involves depositing an edible material into cavities in a mould to produce moulded confections and providing the moulded confections with a code for packaging at later stage. An apparatus for performing the method is also provided.

### Background of the Invention

Conventional moulding lines for manufacturing moulded confections such as chocolate tablets utilize moulds comprising cavities which are arranged in a number of lanes and rows. The lanes of cavities are aligned with the line run direction during moulding. A typical mould comprises 5-20 lanes and 2-6 rows of cavities.

Moulded confections are produced by depositing a confectionary material into each cavity in a particular row of a mould using a multi-lane depositor. The depositor is arranged above the mould and spans the entire width of the mould for this purpose. The depositor comprises a hopper containing the confectionary material, and nozzles aligned with the mould cavities are connected to the hopper so that the material can be deposited into each cavity in one or more rows at the same time. The mould is then transported beneath the depositor (e.g. using a conveyor) and the confectionary material is deposited into the next row or set of rows in the mould. The cavities in successive moulds are filled in the same way.

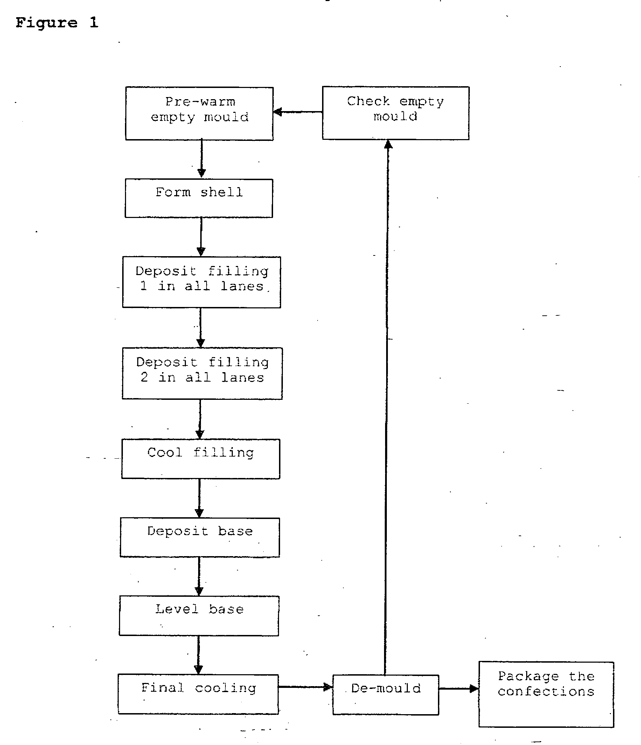

The moulding line may comprise a plurality of depositors in order to produce confections containing more than one type of confectionary material. For instance, moulded confections comprising a dark filling and a white/light filling arranged in layers may be produced using two depositors of the kind described above arranged sequentially above the moulds, one charged with dark filling material (filling 1) and the other charged with white/light filling material (filling 2). A shell (e.g. a chocolate shell) is formed in the mould cavities by deposition and cooling prior to depositing the filling. This is illustrated in Figure 1, which includes further steps for manufacturing moulded confections according to a known method. A base-forming material is deposited onto the filling after a cooling step in order to seal the filling inside the shell and the base. The base is levelled by scraping (or by accurate deposition of the base or vibration of the mould) and a final cooling step is performed. The resultant moulded confections are de-moulded and packaged.

Unfilled confections can be produced by depositing a confectionary material (e.g. chocolate) into the mould cavities after the pre-warming step and omitting the shell-, filling- and base-forming steps shown in Figure 1.

Moulding lines as described above are useful for producing a single variety of moulded confection in high volume. By way of illustration, a conventional continuous-motion moulding line comprising loose or fixed moulds can reach a speed of about 30 moulds per minute or more when producing plain or filled confections with or without inclusions. In mass terms, an output of up to 7,000 kg per hour can be achieved.

However, such moulding lines suffer from a severe lack of flexibility in that they are not suited to producing different varieties of moulded confections in relatively small quantities (e.g. less than 1,000 kg per hour). In order to change, for example, the flavour of the filling, it is necessary to exchange the filling in the multi-lane depositor(s). This requires production to be temporarily suspended, or else a significant quantity of incomplete confections is produced whilst the line continues to operate. The "change-over" time required to exchange the filling leads to inefficiencies in terms of lost production time and also wasted materials since confections produced whilst the line returns to operating speed tend to be sub-optimal. The need for human intervention to perform the change-over is also costly.

Similar problems as regards the change-over time are encountered when other changes/procedures are required to be performed on the moulding line, e.g. changes in the appearance of the confections by changing the embossed pattern in the mould (e.g. for labelling), changes in the shape of the mould cavities, and emptying of the mould cavities for cleaning.

Consequently, conventional moulding lines are restricted to the large-scale manufacture of single varieties of moulded confections. It is not cost-effective to produce smaller amounts of certain varieties "on demand" due to the losses incurred during change-over. This limits the ability of manufacturers to react quickly to market demands. Investment in additional moulding and packaging lines is required to allow different varieties of moulded confections to be produced, and even then the utilization levels of the lines remains low.

It is known to use a multi-lane depositor comprising a hopper divided into a number of chambers in order to deposit different confectionary materials. For example, patent application DE 10 2006 024 310 A discloses a depositor comprising three chambers, each chamber containing a different filling material. The filling material in each chamber is deposited into a different recess in each cavity of a mould via directional channels so that each cavity contains different fillings. However, the same moulded confection is formed in every cavity; there is no variation between the contents of the cavities in different lanes of the mould. The apparatus therefore suffers from a lack of flexibility as discussed above since it is not possible to vary the filling material between the cavities. The allocation of each filling to a certain cavity is fixed. Moreover, it is not possible to change the filling in one of the depositor chambers without disrupting the operation of the entire moulding line since the filling in each chamber is deposited into the cavities in every lane of the mould.

Accordingly, it is an object of the present invention to provide a flexible method for manufacturing moulded confections which are not necessarily the same using a single moulding line, whilst avoiding the above-mentioned disadvantages.

### Summary of the Invention

A first embodiment of the present invention is a method for manufacturing moulded and coded confections comprising the steps of:
(i) depositing an edible material into cavities in a mould to produce moulded confections, the mould comprising two or more lanes of cavities; and
(ii) providing each moulded confection with a code according to the identity of the edible material in the confection so as to produce moulded and coded confections; wherein each lane of cavities is associated with at least one single-lane depositor which deposits the edible material into the cavities in that lane only.

It has been found that a method according to the first embodiment is advantageous in that it enables different moulded confections to be produced on demand using conventional moulds. Specifically, the use of single-lane depositors allows a different edible material to be deposited into each lane of cavities; that is, the number of varieties of moulded confection can be made equal to the number of lanes of cavities in the mould. However, it is also possible to produce the same moulded confection in more than one lane of cavities by depositing the same edible material from the single-lane depositors associated with the lanes in question. The consequence of this is that a particular variety of moulded confection can be produced in a relatively small quantity (e.g. about 100 kg per hour) or a relatively high quantity (e.g. greater than 1,000 kg per hour), as required. The use of single-lane depositors also reduces the change-over time and avoids disruption to the moulding line since each single-lane depositor can be removed from the moulding line independently of the others and replaced almost immediately with another such depositor containing a different edible material. The only loss in this case is a minimal loss of confections in the lane associated with the replaced single-lane depositor. No other lanes are affected.

Providing each moulded confection with a code according to the identity of the edible material deposited by the single-lane depositors allows the confections in each lane to be identified and distinguished. The confections can thus be individually sorted and packaged reliably.

Overall, the method permits the production of different moulded confections on demand and with minimal losses.

A second embodiment of the present invention is a method for manufacturing packaged moulded and coded confections comprising the steps of manufacturing moulded and coded confections by a method according to the first embodiment,
(iii) reading the code on the moulded and coded confections, and
(iv) packaging the moulded and coded confections based on the read code.

The method allows the confections to be reliably packaged according to the identity of the edible material therein, even if the confections are visibly the same (e.g. if the confections differ only in terms of their fillings). Identical or different confections can thus be packaged together according to demand.

A third embodiment of the present invention is an apparatus for manufacturing moulded and coded confections comprising:
(i) a mould comprising two or more lanes of cavities;
(ii) at least one single-lane depositor associated with each lane of cavities so that each single-lane depositor can deposit edible material into the cavities along one lane only, the single-lane depositors being moveable relative to the mould and to each other; and
(iii) a code-producing means for providing moulded confections in the cavities with a code according to the identity of the edible material in the cavities.

The apparatus is adapted to carry out the method defined in the first embodiment of the invention. The apparatus therefore provides the advantages mentioned above with respect to the first embodiment. In particular, the use of single-lane depositors which are moveable relative to the mould and to each other allows each single-lane depositor to be positioned for deposition independently of the remaining single-lane depositors and to be removed from the moulding line without affecting the operation of the remaining single-lane depositors.

### Brief Description of the Drawings

Figure 1 : Flow diagram illustrating a known moulding line for producing filled confections.
Figure 2: Plan view of an apparatus according to the present invention (not to scale).
Figure 3: 3D image showing possible code locations on a chocolate tablet.
Figure 4: Flow diagram of a preferred method according to the invention for producing filled confections.

### Detailed Description of the Invention

A method according to the first embodiment of the present invention defined above is described in detail below.

### (i) Depositing

The method comprises the step of depositing an edible material into cavities in a mould to produce moulded confections, the mould comprising two or more lanes of cavities.

The edible material may be any edible material which is conventionally used to produce moulded confectionary. The edible material preferably comprises at least one of chocolate, cream, caramel, toffee, fruit and nut, and more preferably comprises chocolate.

"Chocolate" includes plain chocolate, dark chocolate, milk chocolate (including family milk chocolate) and white chocolate. These varieties of chocolate can be as defined in the EU Chocolate Directive (Directive 200/36/EC). However, the edible material may also comprise compound chocolate which does not conform to this Directive, e.g. chocolate containing vegetable fat exceeding the limit laid down in the EU Chocolate Directive.

"Cream" includes single cream, double cream and clotted cream. The cream may be treated (e.g. sterilized and/or pasteurized) and can be used in the form of a powder.

Caramel is produced by heating sugars to induce isomerization and polymerization, followed by cooling. Caramel can be used as a liquid or a solid. Toffee is the product obtained by boiling sugar or molasses together with butter.

"Fruit" includes common fruits such as apples and pears; berry fruits such as strawberries, raspberries, blueberries, cranberries and blackberries; stone fruits such as cherries, peaches, nectarines and apricots; citrus fruits such as lemons and oranges; and exotic fruits such as banana, kiwi, pineapple, papaya and mango. Fruit can be in the form of a whole fruit, fruit pieces, a fruit puree, a fruit juice, a fruit juice concentrate or a mixture thereof. The moisture content of fruit is preferably less than 6 wt.% in order to avoid microbial spoilage of the fruit and for ease of processing. Examples of such fruit include raisins.

"Nut" includes, for instance, hazelnut, walnut, almond and coconut. The nut may be in the form of whole nuts, nut pieces or a nut-derived product such as marzipan or nougat.

The edible material may comprise other ingredients selected from, for instance, flavourings (e.g. vanilla or coffee flavouring), sugar (e.g. sucrose, fructose, etc.), alcohol and preservatives.

The edible material may contain inclusions. For example, the edible material may consist of chocolate having nut or fruit pieces mixed therein. Moreover, the edible material may be aerated (e.g. aerated chocolate or whipped cream).

The mould can be a mould conventionally employed in the manufacture of moulded confections, provided that the mould comprises two or more lanes of mould cavities. For instance, the mould may be a tray mould consisting of 2-20 lanes of cavities, the cavities also being arranged into rows (e.g. 2-6 rows). The mould preferably comprises 6-12 lanes in order to optimise the number of different moulded confections that can be produced, yet avoid over-complication of the moulding line due to the presence of many single-lane depositors.

The shape and size of the cavities in the mould is not particularly limited and depends on the type of moulded confection to be produced. All of the cavities in the mould may be identical in shape and size. Alternatively, the shape of the cavities may vary between the lanes and/or between the rows. Also, it is possible for the size of the cavities to vary between the lanes owing to the use of a single-lane depositor associated with each lane. For instance, one lane of cavities may produce tablets and another lane of cavities in the same mould may produce pralines.

The cavities in the mould may contain sub-cavities so that the resultant moulded confection contains recesses on its surface after de-moulding. This enables moulded confections such as chocolate tablets to be divided into blocks which can be broken into manageable pieces. The cavities may also contain other features such as decoration on their internal surfaces.

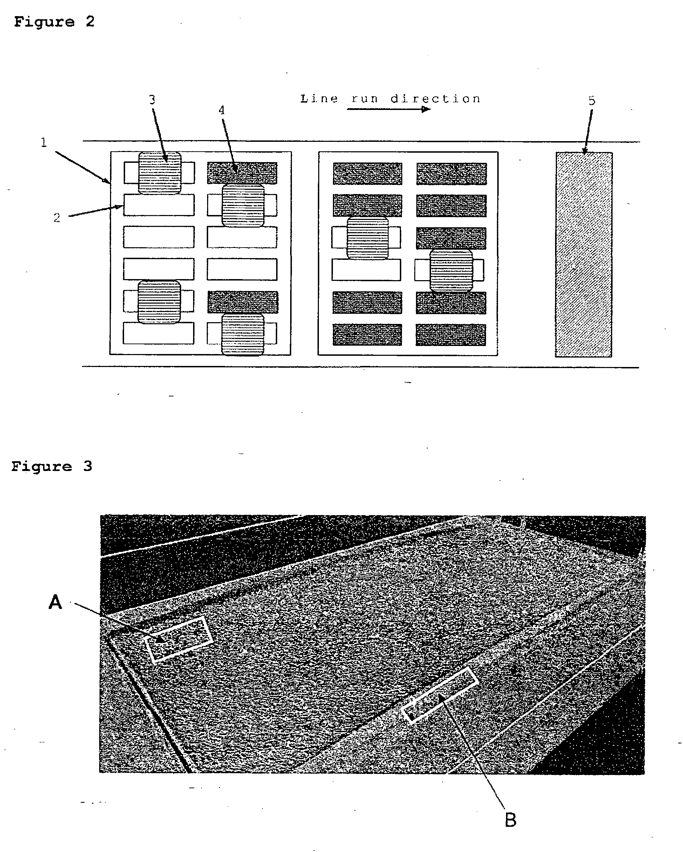

Figure 2 illustrates one possible arrangement of cavities. Two consecutive moulds on a moulding line are depicted in Figure 2. The moulds (1) are identical and each comprises six lanes and two rows of identical rectangular cavities (2).

The mould can be arranged and moved in a conventional manner. For instance, the mould may be fixed to a continuous-motion conveyor or may be loose on an intermittent-motion conveyor.

Each lane of cavities is associated with at least one single-lane depositor which deposits edible material into the cavities in that lane only. The single-lane depositors are independent in that they can deposit different edible materials and can be moved relative to the mould and to each other.

It is preferred that the single-lane depositors are positioned above the lanes of cavities in a staggered formation, which means that depositors located above adjacent lanes are not next to each another (they are not located above adjacent cavities). This allows the depositors to be spaced apart so that they can be moved to and from their depositing positions without disturbing the other depositors. This is illustrated in Figure 2, which depicts a moulding line in which single-lane depositors (3) are arranged above the lanes of cavities in a staggered formation. Each depositor deposits edible material (4) into one cavity at a time. However, the single-lane depositors may alternatively deposit edible material into more than one cavity simultaneously. The mould is conveyed beneath the single-lane depositors so that edible material can be deposited into each of its cavities.

The construction of the single-lane depositors can be as follows:
Each single-lane depositor comprises a chamber having an inlet connected to a tempering machine by flexible tubes and an outlet connected to, for example, a de-crystallization unit by flexible tubes. The depositors do not contain a hopper as in conventional multi-lane depositors. The edible material to be deposited is rather made to continually circulate between the tempering machine, the depositor chamber and the de-crystallization unit, thereby reducing the size of the depositors. The chamber and flexible tubes are preferably heated (e.g. to 26-32°C) to maintain the edible material (e.g. pre-crystallized or tempered edible material) in a controlled liquid or viscous form.

Edible material is deposited from the chamber into the cavities in the lane with which the depositor is associated. This can be achieved using one or more pneumatic or hydraulic pistons which pump the edible material through one or more nozzles . The edible material can be deposited via a depositing plate attached to the chamber, the piston(s) being inserted into the depositing plate so that the edible material is drawn from the chamber in one stroke of the piston(s) and deposited through the nozzles via the depositing plate in the return stroke.

The single-lane depositors are supported using, for example, a programmable and moveable industrial robot. This allows the depositors to be independently manoeuvred into position above the lanes of cavities.

Each lane may be associated with more than one single-lane depositor in order produce a moulded confection containing more than one variety of edible material. For instance, two single-lane depositors may be positioned sequentially above one lane of cavities, one of the depositors being charged with a white filling material and the other being charged with a fruit filling material in order to produce layered confections. Alternatively, the single-lane depositors may be of the "one-shot" type, meaning that they can deposit two or more edible materials at substantially the same time. Such depositors typically comprise a nozzle having one or more annular conduits arranged around a central conduit. This allows a confection having a shell and a filling, or a filling and a finishing layer, to be moulded in a single step.

The single-lane depositors are able to deposit different edible materials. That is, each lane may be dedicated to the manufacture of a different variety of moulded confection. However, if a higher quantity of a particular variety of moulded confection is required, two or more single-lane depositors may deposit the same edible material. In this case, a single tempering unit containing the edible material in question can be connected to the single-lane depositors associated with two or more lanes. A high degree of flexibility is thus afforded by the use of single-lane depositors. In the extreme, it is possible to produce a single unit of a particular variety of moulded confection. The method is therefore suited to the manufacture of personalized confections as well as the bulk manufacture of single varieties of confections.

The single-lane depositors may be used in conjunction with a conventional multi-lane depositor if it is required to deposit a common material into every cavity in the mould (e.g. to form a shell or a base layer). A multi-lane depositor may be positioned upstream or downstream of the single lane-depositors.

The single-lane depositors can be controlled by a mutual positioning system which enables the positions of the mould and depositors to be coordinated. This allows edible material to be deposited accurately into the cavities in each lane, and also allows a change-over command to be sent automatically to individual single-lane depositors so that the edible material can be exchanged. For instance, radio frequency identification (RFID) can be employed to control the single-lane depositors according to information on the mould. This can involve placing a tag in each lane of cavities, the tag bearing a code according to the edible material to be deposited into the cavities in each lane. The tag in a particular lane communicates with a moulding line Programmable Logic Controller (PLC) unit so that a single-lane depositor can be controlled to deposit a particular edible material into the cavities in that lane.

The moulded confections can take a variety of forms, depending in part on the construction of the mould cavities and the arrangement of depositors above the lanes of cavities. The moulded confections can be in the form of, for instance, tablets, bars or pralines. The moulded confections can be unfilled (e.g. a chocolate tablet, a shell, a hollow figure or a part thereof) or filled (e.g. a praline comprising a shell and a filling). The form of the moulded confections may vary between the lanes of cavities. For instance, unfilled and filled confections can be manufactured simultaneously in different lanes according to demand.

The edible material deposited by the single-lane depositors may form an unfilled mass (e.g. a chocolate tablet), a filling, a shell or a finishing layer. It is therefore possible to form different unfilled masses, fillings, shells or finishing layers in different lanes of cavities. Alternatively, the edible material may form a decorative element which differs between the lanes of cavities. It is, however, preferred that the edible material deposited by the single-lane depositors is a filling material. More preferably, the moulded confections comprise a chocolate shell formed prior to step (i) and a filling comprising the edible material. The composition and texture of the filling material can be adjusted to have a certain sensorial profile.

### (ii) Coding

Each moulded confection is provided with a code according to the identity of the edible material in the confection. As shown in Figure 2, this is achieved using a code-producing means (5) positioned downstream of the single-lane depositors.

The code provided on the moulded confections is unique to the type of edible material deposited by the single-lane depositors, and so allows confections comprising different edible materials to be distinguished. The edible materials may be distinguished in terms of the ingredients therein or in terms of other properties such as their degree of aeration or the amount of the edible materials contained in the confections.

It is desirable that the code is formed accurately on the moulded confections and is stable to the subsequent treatment of the confections so that different confections can be reliably distinguished. The code must also be safe (i.e. nontoxic) and should preferably not have a negative impact on the appearance of the confections.

According to a preferred embodiment, the code is an embossment produced by depositing one or more wax droplets onto the surface of the moulded confections by ink-jet printing. The wax can be ejected from a food-grade standard ink-jet printer head. A single wax droplet can be used to identify and distinguish the moulded confections by the size and/or shape of the droplet. More than one wax droplet can also identify and distinguish the moulded confections in this way; however, the number and/or arrangement of multiple wax droplets can alternatively, or additionally, be used to form the code. Alternatively, the code may be based on the colour of the wax. It is though preferred that the wax is colourless so that it is substantially invisible to the human eye. A suitable wax is obtained from the high melting point fractions of palm oil.

It is preferred that wax is deposited following cooling of the moulded confections (e.g. to 9-17°C) so that the surface onto which the wax is deposited is solidified. This avoids mixing of confection ingredients at the surface with the wax, running of the wax on the surface or some other disturbance of the wax droplet(s).

According to an alternative preferred embodiment, the code is formed by one or more impressions in the surface of the moulded confections. The impression(s) may be formed by mechanical penetration of the surface using ordinary tools. However, it is preferred that the impression(s) is/are part-spherical in order reduce the occurrence of fat blooms on the surface of the confections.

A single impression can identify and distinguish the moulded confections by the size and/or shape of the impression. This is also the case where more than one impression is formed in the surface; however, the number and/or arrangement of multiple impressions on the surface can also be used to form the code. The impression(s) preferably has/have a largest diameter of no more than 2 mm, more preferably 0.5-2.0 mm, and the depth of the impression(s) is/are preferably 0.2-5.0 mm for ease of detection whilst avoiding spoiling the appearance of the confections.

An impression can be formed in the surface of the moulded confections using a piezo-actuated needle, which preferably has a rounded end.

An impression is preferably formed after the moulded confections have been cooled so that they are partially solidified to prevent running of confection ingredients into the impression. The impression may be made whilst the moulded confections are inside a cooler so that the confections are further solidified straight after the impression is formed.

According to a further preferred embodiment, the code is a embossment formed by pressing one or more pre-made objects into the surface of the moulded confections (e.g. by gentle stamping). The objects can take a variety of shapes to distinguish the confections. For instance, the objects, which are edible, can be shaped so as to represent the edible material in the confections. So, where the edible material is a fruit filling, the objects can represent the type of fruit in the filling (e.g. strawberry, raspberry, etc.). Alternatively, the moulded confections may be distinguished by the number and/or arrangement of a plurality of objects on their surface, or by the colours of the objects.

The objects can have a composition which is the same as that of other parts of the moulded confections. For example, the objects may consist of chocolate as used for forming a base on the confections, optionally with added decoration.

The objects to be pressed into the surface of the moulded confections have a preferred depth of 1.0-2.5 mm, and the depth of the objects when pressed into the surface of the moulded confections (i.e. the height of embossment) is preferably 2.0 mm in order to provide a sufficiently embossed surface for reading whilst not hindering the further processing of the confections or tarnishing their surface appearance.

It is preferred that the embossment is formed while the moulded confections are only partially solidified so that the objects can be pressed easily into the surface of the confections. Moreover, it is preferred to cool and so solidify the moulded confections after embossment so that the objects are set into the surface of the moulded confections without damaging the confections (e.g. forming cracks in the surface of the confections).

The code is most preferably an embossment formed by pressing one or more objects into the surface of the moulded confections. This is because the objects are robust to further treatment (e.g. de-moulding) and handling of the confections. Also, the objects can serve a dual purpose in that they can be used to decorate the moulded confections as well as codify them.

The code may be provided on any part of the surface of the moulded confections which is capable of being read. As shown in Figure 3, the code may be provided on the upper surface (location A) or on the side face (location B) of the moulded confections. It is, however, preferred that the code is formed on the upper surface of the moulded confections for ease of code formation and code reading. The moulded confection shown in Figure 3 is a chocolate tablet.

It is possible to provide the moulded confections with more than one code. For instance, the moulded confections can be provided with a code according to the edible material in a filling and a code according to the edible material in a decorative element on the surface of the confections. Accordingly, moulded confections can be distinguished firstly on the basis of their fillings and also on the basis of their decoration.

### Additional steps

The method may include one or more additional steps besides steps (i) and (ii) described above. For instance, a shell may be formed in the cavities of the mould prior to depositing the edible material in step (i). The shell may be common to all of the cavities in the mould, and the shell is preferably a chocolate shell.

A shell can be formed in the cavities using conventional methods. For example, liquid shell material (e.g. liquid chocolate) may be deposited into the cavities, the mould vibrated to remove air bubbles in the shell material, the mould upturned to remove excess shell material, and the shell material remaining in the cavities solidified by cooling. Alternatively, and preferably, the shell is formed by stamping (e.g. cold-stamping, frozen-cone or cold-press moulding), whereby the liquid shell material is pressed against the wall of the cavities and set by inserting a stamp cooled to between -10°C and 5°C into the cavities for up to 5 seconds.

A finishing layer may be formed on the moulded confections prior to providing the confections with a code. The finishing layer forms the uppermost layer of the confection in the cavities, but can form the base of the confections once the confections are de-moulded. The finishing layer can be formed from the same material as the shell when a shell is also provided, but this is not essential. The finishing layer is preferably a chocolate layer. The code is preferably formed on the finishing layer.

It is particularly preferred that the moulded confections are unfilled chocolate confections comprising the edible material, or the moulded confections comprise a chocolate shell, a filling comprising the edible material and a chocolate base on which the code is formed. These different confections can be produced simultaneously in different lanes of cavities.

As a further optional and preferred step, the moulded confections are subjected to a vibration treatment in order to eliminate unwanted air bubbles in the confections and smoothen the exposed upper surface of the confections for coding. This provides a more even surface compared to that obtained by scraping the surface of the confections according to conventional methods.

A method according to the second embodiment of the present invention defined above is described in detail below.

### (iii) Reading

The method comprises the step of reading the code on moulded and coded confections produced by following steps (i) and (ii) according to the first embodiment described above.

The code can be read using a CCD array camera if the code consists of a two-dimensional pattern, provided that there is sufficient illumination of the code.

The code can be read using a 3D scanner (e.g. a triangulation-type 3D scanner), which utilizes a laser light source and a camera to analyze the surface structure of the moulded and coded confections in the case that the code is an embossment or an impression. One or more 3D scanners are arranged so that the code on each confection is within the field of view of at least one of the scanners.

It is advantageous to read the code on the moulded and coded confections immediately after the code is formed as well as prior to packaging in order to verify that the code is accurate. This enables confections bearing inaccurate codes (the codes that are read do not correspond to the code programmed into the code-producing means) to be identified and removed prior to further treatment of the confections.

The moulded and coded confections can be de-moulded before or after code reading, though it is more reliable to read the code on the confections before de-moulding. De-moulding is preferably performed by suction, whereby the orientation of the confections is retained during their removal from the cavities rather than turning the confections. The confections can thus be placed onto a surface (e.g. a conveyor) so that the code is not in contact with the surface. This avoids damage to the code and allows the code to be read without having to re-orientate the confections.

### (iv) Packaging

The method of the second embodiment also comprises the step of packaging the moulded and coded confections according to the read code. "Packaging" includes wrapping individual moulded and coded confections and packaging the wrapped confections (e.g. into boxes).

Packaging is performed after the confections are de-moulded, and involves diverting the lanes of confections into packaging lanes according to the read code. This can be achieved using a splitter junction located between the moulding line and the packaging lanes. The packaging lanes lead to one or more packaging machines. According to demand, the moulded and coded confections can be directed into any packaging lane. For instance, all confections of the same variety (i.e. bearing the same code) may be directed to one packaging machine so that they are wrapped identically.

Each packaging lane can be provided with a buffering system in order to accommodate confections in the event that the operation of the packaging lanes is disrupted. This avoids loss of confections. It is also preferred that the number of packaging lanes is greater than the number of lanes of cavities in the mould in order to provide additional packaging capacity (overcapacity) so that it is not required to make adjustments to the speed of the moulding line to match the speed of packaging. Moulding can thus be performed at an optimum moulding line speed, which avoids the production of defective confections, e.g. due to slowing of the moulding line to match the speed of packaging.

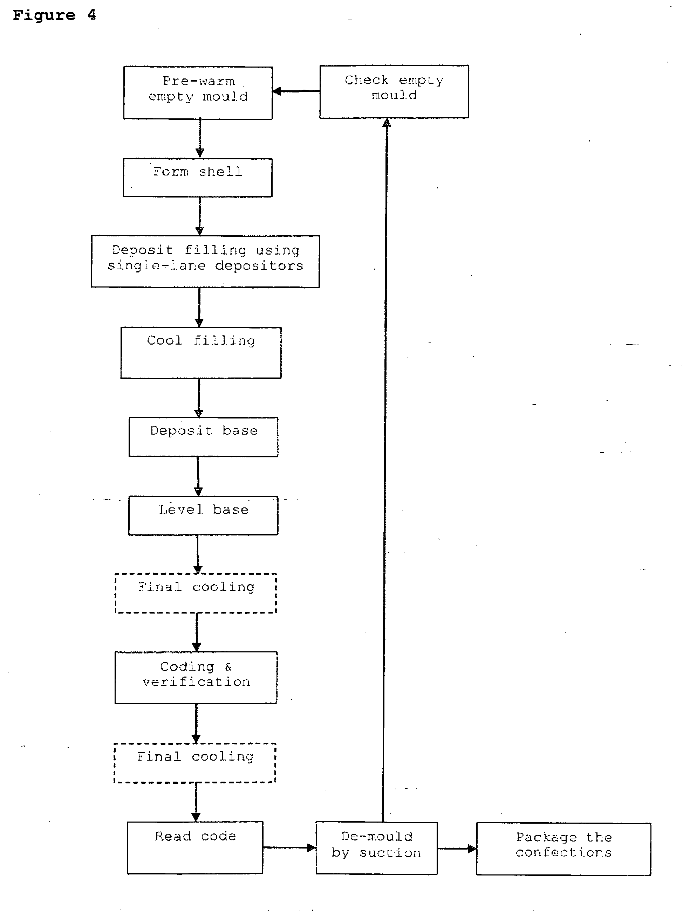

Figure 4 illustrates a particularly preferred embodiment of the invention. The method shown in Figure 4 comprises the initial step of pre-warming an empty mould comprising two or more lanes of cavities in order to avoid a large temperature gradient between the cavities and the material deposited therein. A shell (e.g. a chocolate shell) is then formed in each cavity in the mould by deposition and cooling. The shell material can be common to every cavity in the mould, as described above. Next, an edible material in a liquid or highly viscous form is deposited into the shells in the cavities from single-lane depositors associated with each lane of cavities to form a filling inside the shells. The edible material in the single-lane depositors can be the same or different according to demand. The mould is conveyed beneath the single-lane depositors in order to fill the cavities in each row of the mould. The filling is then cooled so that it solidifies. Following this, a base layer (e.g. a chocolate base layer) is deposited onto the filling in the cavities, and the base layer is levelled, preferably by vibration of the mould.

The moulded confections are provided with a code and the code is read to verify its accuracy. The moulded confections are subjected to a final cooling step before or after coding and verification, depending upon the nature of the code (see above) in order to solidify the base layer.

The code on the moulded confections is read and the confections are then de-moulded by suction. The confections are packaged on the basis of the read code.

Unfilled moulded and coded confections (e.g. chocolate tablets) according to an alternative preferred embodiment are prepared in the same way as described above and illustrated in Figure 4, except that the edible material is deposited from the single-lane depositors after the pre-warming step and the shell-, filling- and base-forming steps and the base levelling step are omitted. Final cooling and coding & verification (or vice versa) are preferably performed after the edible material is de-aerated and levelled (e.g. by vibration of the mould).

Filled and unfilled moulded and coded confections as described above can be produced simultaneously in different lanes of cavities.

The present invention also provides an apparatus for manufacturing moulded and coded confections by a method according to the first embodiment described above. The apparatus comprises (i) a mould comprising two or more lanes of cavities and (ii) at least one single-lane depositor associated with each lane of cavities so that each single-lane depositor can deposit edible material into the cavities along one lane only, the single-lane depositors being moveable relative to the mould and to each other. The mould (i) and the single-lane depositors (ii) are as described above regarding the first embodiment of the invention. The single-lane depositors are preferably positioned above the lanes in a staggered formation for ease of handling of the depositors, as mentioned above.

The apparatus also comprises (iii) a code-producing means for providing moulded confections in the cavities with a code according to the identity of the edible material in the cavities. The code-producing means can be an ink-jet printer for forming an embossment on the surface of the moulded confections (e.g. using wax droplets), a mechanically-operated tool for forming an impression in the moulded confections (e.g. a piezo-actuated needle having a rounded end) or a means for pressing one or more objects into the surface of the moulded confections (e.g. a stamp) as described above with respect to the first embodiment of the invention.

## Claims

1. A method for manufacturing moulded and coded confections comprising the steps of:
(i) depositing an edible material into cavities in a mould to produce moulded confections, the mould comprising two or more lanes of cavities; and
(ii) providing each moulded confection with a code according to the identity of the edible material in the confection so as to produce moulded and coded confections; wherein each lane of cavities is associated with at least one single-lane depositor which deposits the edible material into the cavities in that lane only.

2. A method according to Claim 1, wherein a different edible material is deposited into each lane of cavities.

3. A method according to Claim 1 or Claim 2, wherein the edible material is a filling material comprising at least one of chocolate, cream, caramel, toffee, fruit and nut.

4. A method according to any preceding claim, wherein the single-lane depositors are positioned above the lanes of cavities in a staggered formation.

5. A method according to any preceding claim, wherein the code provided in step (ii) is an embossment produced by depositing one or more wax droplets onto the surface of the moulded confections by ink-jet printing.

6. A method according to Claim 5, wherein the wax is colourless.

7. A method according to any of Claims 1-4, wherein the code provided in step (ii) is an impression formed in the surface of the moulded confections.

8. A method according to Claim 7, wherein the impression comprises one or more part-spherical impressions.

9. A method according to any preceding claim, further comprising the step of cooling the moulded confections prior to step (ii).

10. A method according to any of Claims 1-4, wherein the code provided in step (ii) is an embossment formed by pressing one or more objects into the surface of the moulded confections. -

11. A method according to any preceding claim, further comprising the step of forming a chocolate finishing layer on the moulded confections prior to step (ii), and forming the code on the chocolate finishing layer.

12. A method for manufacturing packaged moulded and coded confections comprising the steps of manufacturing moulded and coded confections by a method according to any preceding claim,
(iii) reading the code on the moulded and coded confections, and
(iv) packaging the moulded and coded confections based on the read code.

13. A method according to Claim 12, wherein the moulded and coded confections are directed into packaging lanes based on the read code in step (iv), the number of packaging lanes being greater than the number of lanes of cavities in the mould.

14. An apparatus for manufacturing moulded and coded confections comprising:
(i) a mould comprising two or more lanes of cavities;
(ii) at least one single-lane depositor associated with each lane of cavities so that each single-lane depositor can deposit edible material into the cavities along one lane only, the single-lane depositors being moveable relative to the mould and to each other; and
(iii) a code-producing means for providing moulded confections in the cavities with a code according to the identity of the edible material in the cavities.

15. An apparatus according to Claim 14, wherein the single-lane depositors are positioned above the lanes in a staggered formation.

## Patentansprüche

1. Verfahren zur Herstellung geformter und kodierter Konfekte, umfassend die Schritte des:
(i) Aufbringens eines essbaren Materials in Aushöhlungen in einer Form, um geformte Konfekte herzustellen, wobei die Form zwei oder mehr Bahnen von Aushöhlungen umfasst; und
(ii) Versehens eines jeden geformten Konfekts mit einem Code entsprechend der Identität des essbaren Materials im Konfekt, um geformte und kodierte Konfekte herzustellen;
worin jede Bahn von Aushöhlungen mit mindestens einem Einzelbahn-Aufbringer assoziiert ist, der das essbare Material nur in die Aushöhlungen in dieser Bahn aufbringt.

2. Verfahren gemäß Anspruch 1, worin in jede Bahn von Aushöhlungen ein unterschiedliches essbares Material aufgebracht wird.

3. Verfahren gemäß Anspruch 1 oder 2, worin das essbare Material ein Füllmaterial ist, das mindestens eines aus Schokolade, Creme, Karamell, Toffee, Frucht und Nuss umfasst.

4. Verfahren gemäß irgendeinem vorhergehenden Anspruch, worin die Einzelbahn-Aufbringer oberhalb der Bahnen von Aushöhlungen in einer gestaffelten Anordnung positioniert sind.

5. Verfahren gemäß irgendeinem vorhergehenden Anspruch, worin der in Schritt (ii) erstellte Code eine Prägung ist, die durch Aufbringen von einem oder mehreren Wachströpfchen auf die Oberfläche der geformten Konfekte mittels Tintenstrahldruck hergestellt wird.

6. Verfahren gemäß Anspruch 5, worin das Wachs farblos ist.

7. Verfahren gemäß irgendeinem der Ansprüche 1 bis 4, worin der in Schritt (ii) erstellte Code ein Abdruck ist, der in der Oberfläche der geformten Konfekte gebildet wird.

8. Verfahren gemäß Anspruch 7, worin der Abdruck einen oder mehrere teilsphärische Abdrücke umfasst.

9. Verfahren gemäß irgendeinem vorhergehenden Anspruch, das weiterhin den Schritt des Abkühlens der geformten Konfekte vor dem Schritt (ii) umfasst.

10. Verfahren gemäß irgendeinem der Ansprüche 1 bis 4, worin der in Schritt (ii) erstellte Code eine Prägung ist, die durch Pressen eines oder mehrerer Objekte in die Oberfläche der geformten Konfekte gebildet wird.

11. Verfahren gemäß irgendeinem vorhergehenden Anspruch, das weiterhin vor Schritt (ii) den Schritt des Bildens einer Schokoladendeckschicht auf den geformten Konfekten sowie das Bilden des Codes auf der Schokoladendeckschicht umfasst.

12. Verfahren zur Herstellung verpackter, geformter und kodierter Konfekte, das die Schritte des Herstellens geformter und kodierter Konfekte durch ein Verfahren gemäß irgendeinem vorhergehenden Anspruch,
(iii) lesen des Codes auf den geformten und kodierten Konfekten und
(iv) Verpackens der geformten und kodierten Konfekte auf Basis des gelesenen Codes umfasst.

13. Verfahren gemäß Anspruch 12, worin die geformten und kodierten Konfekte auf Basis des in Schritt (iv) gelesenen Codes in Verpackungs-Fertigungsbahnen geführt werden, worin die Anzahl der Verpackungs-Fertigungsbahnen größer ist als die Anzahl der Bahnen von Aushöhlungen in der Form.

14. Vorrichtung zur Herstellung geformter und kodierter Konfekte, umfassend:
(i) eine Form, die zwei oder mehr Bahnen von Aushöhlungen umfasst;
(ii) mindestens einen Einzelbahn-Aufbringer in Verbindung mit jeder Bahn von Aushöhlungen, sodass jeder Einzelbahn-Aufbringer essbares Material nur in die Aushöhlungen entlang einer Bahn aufbringen kann, wobei die Einzelbahn-Aufbringer relativ zur Form und zueinander beweglich sind; und
(iii) ein Mittel zur Codeerstellung, um geformte Konfekte in den Aushöhlungen mit einem Code entsprechend der Identität des essbaren Materials in den Aushöhlungen zu versehen.

15. Vorrichtung gemäß Anspruch 14, worin die Einzelbahn-Aufbringer oberhalb der Bahnen in einer gestaffelten Anordnung positioniert sind.

## Revendications

1. Procédé pour préparer des produits de confiserie moulés et codés, comprenant les étapes consistant à :
(i) déposer une substance comestible dans des cavités dans un moule pour produire des produits de confiserie moulés, le moule comprenant deux ou plus de deux voies de cavités ; et
(ii) munir chaque produit de confiserie moulé d'un code en fonction de l'identité de la substance comestible présente dans le produit de confiserie de manière à produire des produits de confiserie moulés et codés ;
dans lequel chaque voie de cavités est associée à au moins un dispositif de dépôt en voie unique qui dépose la substance comestible dans les cavités dans cette voie seulement.

2. Procédé suivant la revendication 1, dans lequel une substance comestible différente est déposée dans chaque voie de cavités.

3. Procédé suivant la revendication 1 ou la revendication 2, dans lequel la substance comestible est une substance de fourrage comprenant au moins une des substances consistant en le chocolat, la crème, le caramel, le caramel au beurre, un fruit et les noix.

4. Procédé suivant l'une quelconque des revendications précédentes, dans lequel les dispositifs de dépôt en voie unique sont positionnés au-dessus des voies de cavités de manière étagée.

5. Procédé suivant l'une quelconque des revendications précédentes, dans lequel le code fourni dans l'étape (ii) est un gaufrage produit en déposant une ou plusieurs gouttelettes de cire sur la surface des produits de confiserie moulés, par impression par jet d'encre.

6. Procédé suivant la revendication 5, dans lequel la cire est incolore.

7. Procédé suivant l'une quelconque des revendications 1 à 4, dans lequel le code fourni dans l'étape (ii) est une impression formée dans la surface des produits de confiserie moulés.

8. Procédé suivant la revendication 7, dans lequel l'impression comprend une ou plusieurs impressions partiellement sphériques.

9. Procédé suivant l'une quelconque des revendications précédentes, comprenant en outre l'étape de refroidissement des produits de confiserie moulés avant l'étape (ii).

10. Procédé suivant l'une quelconque des revendications 1 à 4, dans lequel le code fourni dans l'étape (ii) est un gaufrage formé en pressant un ou plusieurs objets dans la surface des produits de confiserie moulés.

11. Procédé suivant l'une quelconque des revendications précédentes, comprenant en outre l'étape de formation d'une couche de finition en chocolat sur les produits de confiserie moulés avant l'étape (ii), et de formation du code sur la couche de finition en chocolat.

12. Procédé pour fabriquer des produits de confiserie moulés et codés emballés, comprenant les étapes de fabrication de produits de confiserie moulés et codés par un procédé suivant l'une quelconque des revendications précédentes,
(iii) de lecture du code sur les produits de confiserie moulés et codés, et
(iv) d'emballage des produits de confiserie moulés et codés d'après le code lu.

13. Procédé suivant la revendication 12, dans lequel les produits de confiserie moulés et codés sont dirigés dans des voies d'emballage sur la base du code lu dans l'étape (iv), le nombre de voies d'emballage étant supérieur au nombre de voies de cavités dans le moule.

14. Appareil pour fabriquer des produits de confiserie moulés et codés, comprenant :
(i) un moule comprenant deux ou plus de deux voies de cavités ;
(ii) au moins un dispositif de dépôt en voie unique associé à chaque voie de cavités de telle sorte que chaque dispositif de dépôt en voie unique puisse déposer une substance comestible dans les cavités le long d'une voie seulement, les dispositifs de dépôt en voie unique étant mobiles par rapport au moule et les uns par rapport aux autres ; et
(iii) un moyen produisant un code pour munir les produits de confiserie moulés présents dans les cavités d'un code en fonction de l'identité de la substance comestible dans les cavités.

15. Appareil suivant la revendication 14, dans lequel les dispositifs de dépôts en voie unique sont positionnés au-dessus des voies suivant une configuration étagée.
